# EUROPEAN PATENT SPECIFICATION

(11) **EP 3 410 736 B1**
(45) Date of publication and mention of the grant of the patent: **15.07.2020**
(21) Application number: 17743585.6
(22) Date of filing: 16.01.2017
(51) Int. Cl.: H04Q 11/00

(54) **ONU STATE TRANSITION METHOD, ONU, AND COMPUTER STORAGE MEDIUM**
ONU-ZUSTANDSÜBERGANGSVERFAHREN, ONU UND COMPUTERSPEICHERMEDIUM
PROCÉDÉ DE TRANSITION D'ÉTAT D'ONU, ONU, ET SUPPORT D'INFORMATIONS INFORMATIQUE

(30) Priority: 25.01.2016 CN 201610050740
(43) Date of publication of application: 05.12.2018
(73) Proprietor: Sanechips Technology Co., Ltd., Shenzhen, Guangdong 518055 (CN)
(72) Inventor: WANG, Xin, Shenzhen Guangdong 518055 (CN); MIN, Jingguo, Shenzhen Guangdong 518055 (CN); QIAN, Xiaodong, Shenzhen Guangdong 518055 (CN)
(74) Representative: Wallinger Ricker Schlotter Tostmann
(86) International application number: PCT/CN2017/071221
(87) International publication number: WO 2017/128970

(56) References cited:
- EP-A1- 2 897 374
- WO-A1-2011/021307
- CN-A- 101 873 518
- CN-A- 102 404 047
- CN-A- 103 916 257
- CN-A- 104 429 003
- SAM SAMBASIVAN AT&T ET AL: "Proposed text for G.987.3 and G.988 power saving", ITU-T DRAFT ; STUDY PERIOD 2009-2012, INTERNATIONAL TELECOMMUNICATION UNION, GENEVA ; CH, vol. 2, 4 May 2010 (2010-05-04), pages 1-18, XP017447936, [retrieved on 2010-05-04]
- HIRAFUJI RAISA O C ET AL: "The watchful sleep mode: a new standard for energy efficiency in future access networks", IEEE COMMUNICATIONS MAGAZINE, IEEE SERVICE CENTER, PISCATAWAY, US, vol. 53, no. 8, 1 August 2015 (2015-08-01) , pages 150-157, XP011664981, ISSN: 0163-6804, DOI: 10.1109/MCOM.2015.7180522 [retrieved on 2015-08-05]

## Description

### TECHNICAL FIELD

The invention relates to the technology of optical network unit (ONU), and in particular to a method for transiting a state of an ONU, an ONU and a computer storage medium.

### BACKGROUND

A gigabit-capable passive optical network (GPON)/10 gigabit-capable passive optical network (XGPON) system is an optical network transmission system, which has a bus topology, that is, an optical line terminal (OLT) device is connected to multiple ONUs. Due to the large number of ONUs in the GPON/XGPON system, if the ONU can be designed as a device that can effectively save energy, the energy consumption of the entire GPON/XGPON system will be greatly reduced.

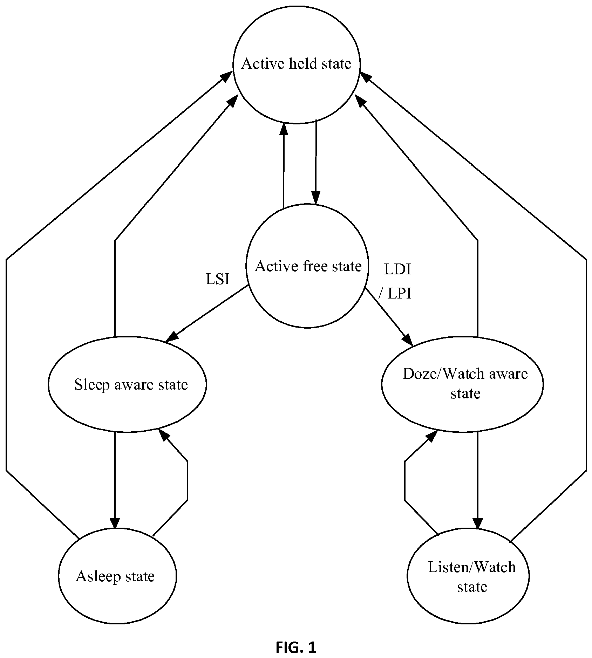

FIG. 1 is a schematic diagram illustrating a transition of a state machine in the related art. As illustrated in FIG. 1, when a Local Sleep Indication (LSI) message is received by the ONU, which indicates that no data to be transmitted exists on the uplink and downlink of the ONU, that is, no uplink data and downlink data exists, the ONU enters an asleep state to save the power consumption. When the ONU is in the asleep state, an uplink data transmit clock and a downlink data transmit clock of the ONU are both in an off state, and the ONU does not operate, and the uplink data and the downlink data cannot be transmitted. When the ONU is in the asleep state and there is downlink data to wait for listening by the ONU, it is required to wake up the ONU from the asleep state, and transit the awake ONU from the asleep state to an active held state, transit from the active held state to an active free state, and transit from the active free state to a doze/watch aware state to listen to the downlink data, and transit the ONU from the doze/watch aware state to a listen/watch state.

When a local low power indication (LPI) message/a local doze indication (LDI) message is received by the ONU, which indicates that downlink data exists on the downlink of the ONU and no uplink data exists on the uplink of the ONU, the ONU enters a listen/watch state. When the ONU is in the listen/watch state, the uplink data transmit clock of the ONU is in the off state, and the downlink data transmit clock of the ONU is in an interval on state. When the downlink data is heard, the downlink data transmit clock is in an on state, otherwise it does not need to be turned on. When the ONU is in the listen/watch state and no uplink data and downlink data exists, the ONU still keeps the listen/watch state, which undoubtedly wastes power consumption. In order to achieve the purpose of energy saving, the ONU is transited from the listen/watch state to the asleep state by the following method. The ONU is transited from the listen/watch state back to the active held state, transited from the active held state to the active free state, and transited from the active free state to the asleep state via the sleep aware state.

It can be seen that, for an ONU in the asleep state to transit from the asleep state to the listen/watch state, it is required to first transit back to the active held state, transit from the active held state to the active free state, and transit from the active free state to the listen/watch state. For an ONU in the listen/watch state to transit from the listen/watch state to the asleep state, it is required to first transit back to the active held state, transit from the active held state to the active free state, and transit from the active free state to the asleep state. In the process of transiting between states in sequence, on the one hand, no matter whether uplink and downlink data exists or not, the uplink data transmit clock and the downlink data transmit clock are always in the on state in the active held state and the active free state, which undoubtedly increases the energy consumption. On the other hand, it takes a transition time more than the order of 10s for every transition from the active held state to the active free state. This long transition time undoubtedly increases the burden on the system processor.

The document EP2897374A1 proposes an optical network element and method of operating an optical network element.

The document "Proposed text for G.987.3 and G.988 power saving", Sam Sambasivan AT&T et al, proposes text for the power saving clause of G.987.3, together with the necessary modifications elsewhere in the TC layer definition.

### SUMMARY

To solve the existing technical problems, a method for transiting a state of an ONU, an ONU and a computer storage medium are provided according to embodiments of the present invention, thereby reducing the energy consumption, shortening a transition time, and realizing effective energy saving for the GPON/XGPON system.

To achieve the above-described objective, the technical solution according to embodiments of the present invention is implemented as follows.

The embodiments of the present invention provide a method according to claim 1, an ONU according to claim 4 and a computer storage medium according to claim 7. Further improvements and embodiments are provided in the dependent claims.

Also provided is a method for transiting a state of an ONU is provided according to an embodiment of the present invention, which includes:
when the ONU is in an asleep state, upon detection of presence of only downlink data, the ONU is controlled to transit from the asleep state to an active free state, and transit from the active free state to a listen/watch state; and
when the ONU is in the listen/watch state, upon detection of absence of the downlink data, the ONU is controlled to transit from the listen/watch state to the active free state, and transit from the active free state to the asleep state.

In the above-described solution, the method further includes: after controlling the ONU to transit from the asleep state to the active free state,
a local low power indication (LPI) message or a local doze indication (LDI) message is detected; and
a first time period is acquired and timed,
where transiting from the active free state to the listen/watch state includes:
upon detection of the LPI message or the LDI message, the ONU is controlled to transit from the active free state to a doze/watch aware state; and
the ONU is controlled to transit from the doze/watch aware state to the listen/watch state when the timing or a countdown of the first time period expires.

In the above-described solution, the method further includes: after controlling the ONU to transit from the listen/watch state to the active free state,
a local sleep indication (LSI) message is detected; and
a second time period is acquired and timed,
where transiting from the active free state to the asleep state includes:
upon detection of the LSI message, the ONU is controlled to transit from the active free state to a sleep aware state; and
the ONU is controlled to transit from the sleep aware state to the asleep state when the timing or a countdown of the second time period expires.

In the above-described solution, when the ONU is in the asleep state,
an uplink data transmit clock and a downlink data transmit clock are controlled to be in an off state;
after the ONU is controlled to transit from the asleep state to the active free state and transit from the active free state to the doze/watch aware state, the uplink data transmit clock and the downlink data transmit clock are controlled to be in an on state; and
after the ONU is controlled to transit from the doze/watch aware state to the listen/watch state, the uplink data transmit clock is switched from the on state to the off state, and the downlink data transmit clock is controlled to be in the on state or switched from the on state to an interval on state.

In the above-described solution, when the ONU is in the listen/watch state, an uplink data transmit clock of the ONU is controlled to be in an off state, and a downlink data transmit clock of the ONU is controlled to be in an on state or an interval on state;
after the ONU is controlled to transit from the listen/watch state to the active free state and transit from the active free state to the sleep aware state, the uplink data transmit clock and the downlink data transmit clock are controlled to be in an on state; and
after the ONU is controlled to transit from the sleep aware state to the asleep state, the uplink data transmit clock and the downlink data transmit clock are switched from the on state to the off state.

Also provided is an optical network unit (ONU), which includes:
a first control unit and a first transition unit,
   where the first control unit is configured to, when the ONU is in an asleep state, upon detection of presence of only downlink data, control the ONU to transit from the asleep state to an active free state; and
   the first transition unit is configured to transit from the active free state to a listen/watch state;
   or,
a second control unit and a second transition unit,
   where the second control unit is configured to, when the ONU is in a listen/watch state, upon detection of absence of downlink data, control the ONU to transit from the listen/watch state to an active free state; and
   the second transition unit is configured to transit from the active free state to an asleep state;
   or,
a first control unit, a first transition unit, a second control unit and a second transition unit,
where the first control unit is configured to, when the ONU is in an asleep state, upon detection of presence of only downlink data, control the ONU to transit from an asleep state to an active free state;
the first transition unit is configured to transit from the active free state to a listen/watch state;
the second control unit is configured to, when the ONU is in the listen/watch state, upon detection of absence of the downlink data, control the ONU to transit from the listen/watch state to the active free state; and
the second transition unit is configured to transit from the active free state to the asleep state.

In the above-described solution, the first control unit is further configured to:
detect a local low power indication (LPI) message or a local doze indication (LDI) message; and
acquire and time a first time period,
where the first transition unit is configured to transit the ONU from the active free state to a doze/watch aware state when the LPI message or the LDI message is detected by the first control unit; and
transit the ONU from the doze/watch aware state to the listen/watch state when the first control unit determines that the timing or a countdown of the first time period expires.

In the above-described solution, the second control unit is further configured to:
detect a local sleep indication (LSI) message; and
acquire and time a second time period,
where the second transition unit is configured to control the ONU to transit from the active free state to a sleep aware state when the LSI message is detected by the second control unit; and
control the ONU to transit from the sleep aware state to the asleep state when the second control unit determines that the timing or a countdown of the second time period expires.

In the above-described solution, the first control unit is further configured to:
when the ONU is in the asleep state, control an uplink data transmit clock and a downlink data transmit clock to be in an off state;
after the ONU is controlled to transit from the asleep state to the active free state and transit from the active free state to the doze/watch aware state, control the uplink data transmit clock and the downlink data transmit clock to be in an on state; and
after the ONU is controlled to transit from the doze/watch aware state to the listen/watch state, switch the uplink data transmit clock from the on state to the off state, and control the downlink data transmit clock to be in the on state or switch the downlink data transmit clock from the on state to an interval on state.

In the above-described solution, the second control unit is further configured to:
when the ONU is in the listen/watch state, control an uplink data transmit clock of the ONU to be in an off state, and control a downlink data transmit clock of the ONU to be in an on state or an interval on state;
after the ONU is controlled to transit from the listen/watch state to the active free state and transit from the active free state to the sleep aware state, control the uplink data transmit clock and the downlink data transmit clock to be in an on state; and
after the ONU is controlled to transit from the sleep aware state to the asleep state, switch the uplink data transmit data and the downlink data transmit data from the on state to the off state.

With the method for transiting a state of an ONU, the ONU, and the computer storage medium according to the embodiments of the present invention, when the ONU is in the asleep state, upon detection of presence of only downlink data, the ONU is controlled to transit from the asleep state to the active free state, and then transit from the active free state to the listen/watch state. When the ONU is in the listen/watch state, upon detection of absence of the downlink data, the ONU is controlled to transit from the listen/watch state to the active free state, and then transit from the active free state to the asleep state. By adopting the technical solution in the present embodiment, the ONU is transited from the asleep state to the listen/watch state or transited from the listen/watch state to the asleep state, it is no need to transit back to the active held state, thereby reducing the energy consumption, shortening the transition time, and thus achieving effective energy saving for the GPON/XGPON system.

### BRIEF DESCRIPTION OF DRAWINGS

FIG. 1 is a schematic diagram illustrating a transition of a state machine of an ONU in the related art;
FIG. 2 is a schematic diagram illustrating a transition of a state machine of an ONU according to an embodiment of the present invention;
FIG. 3 is a schematic diagram illustrating an implementation flow of a method for transiting a state of an ONU according to an embodiment of the present invention;
FIG. 4 is another schematic diagram illustrating a transition of a state machine of an ONU according to an embodiment of the present invention;
FIG. 5 is a schematic diagram illustrating a first constitution structure of an ONU according to an embodiment of the present invention;
FIG. 6 is a schematic diagram illustrating a second constitution structure of an ONU according to an embodiment of the present invention; and
FIG. 7 is a schematic diagram illustrating a third constitution structure of an ONU according to an embodiment of the present invention.

### DETAILED DESCRIPTION

The preferred embodiments of the present invention are described in detail below in conjunction with the accompanying drawings. It should be understood that the preferred embodiments described below are intended to illustrate and explain the present invention, and not limit the present invention.

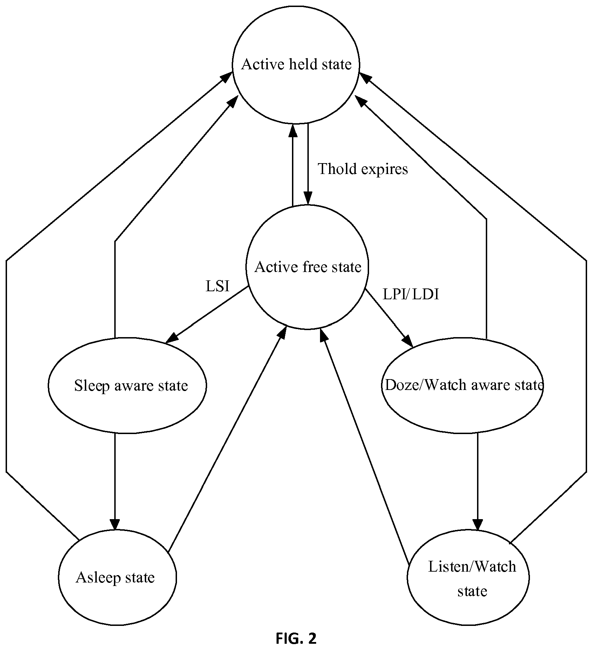

FIG. 2 is a schematic diagram illustrating a transition of a state machine of an ONU according to an embodiment of the present invention. Before describing the method for transiting a state of the ONU and the ONU according to the embodiments of the present invention, the process of how the ONU enters from the active held state to the asleep state and from the active held state to the listen/watch state is briefly introduced in conjunction with FIG. 2.

When the ONU is successfully registered in the GPON/XGPON system, the ONU enters the active held state. The ONU transits from the active held state to the active free state upon reception of a power saving indication message sent by an OLT and when a thold of a timer expires (Thold expires). In the active free state, the LSI and LPI/LDI indications of the ONU are waited for. Specifically, the OLT sends the power saving indication message to the ONU via a physical layer operation administration and maintenance (PLOAM) message; and the OLT sends a value of the Thold to the ONU via an OMCI channel.

When the LSI message is received by the ONU, it indicates that no uplink data and downlink data exists, the ONU is transited from the active free state to the sleep aware state. In both states, such as, the active free state and the sleep aware state, the uplink data transmit clock and the downlink data transmit clock are both in an on state. After the ONU is transited from the active free state to the sleep aware state, the ONU sends a PLOAM message to the OLT to notify the OLT that the ONU enters a sleep state. The ONU enters the asleep state from the sleep Aware state and turns off the uplink data transmit clock and the downlink data transmit clock.

When the LPI/LDI message is received by the ONU, it indicates that downlink data exists and no uplink data exists. The ONU is transited from the active free state to the doze/watch aware state. In both states, such as, the active free state and the doze/watch aware state, the uplink data transmit clock and downlink data transmit clock are both in the on state. After the ONU is transited from the active free state to the doze/watch aware state, the ONU sends the PLOAM message to the OLT to notify the OLT that the ONU enters a listening state. The ONU enters the listen/watch state from the doze/watch aware state, and turns off the uplink data transmit clock, and continuously turns on the downlink data transmit clock or turns on the downlink data transmit clock in an interval.

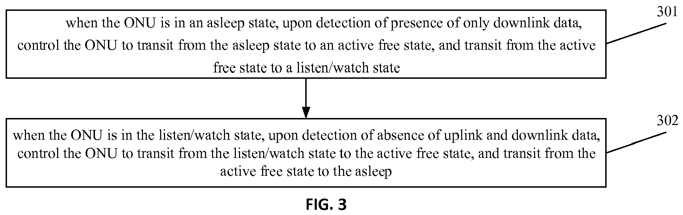

FIG. 3 is a schematic diagram illustrating an implementation flow of a method for transiting a state of an ONU according to an embodiment of the present invention. As illustrated in FIG. 3, the method includes the following operations.

In 301, when the ONU is in an asleep state, upon detection of presence of only downlink data, the ONU is controlled to transit from the asleep state to an active free state, and transit from the active free state to a listen/watch state.

The operation 301 is explained in conjunction with FIG.2. The uplink data transmit clock and the downlink data transmit clock of the ONU in the asleep state are both in an off state, and it is no need to transmit uplink data and downlink data, that is, the ONU does not need to operate. When the ONU in the asleep state knows the existence of the downlink data, the ONU is woken up first and controlled to transit from the asleep state to the active free state. When the ONU is in the active free state, the uplink data transmit clock and the downlink data transmit clock of the ONU are both in the on state so that the ONU transmits the downlink data when the downlink data transmit clock is in the on state. Specifically, the OLT sets the time for the ONU to be in the asleep state in advance, and sends the time for the ONU to keep in the asleep state to the ONU while the OLT sends a value of the Thold to the ONU via the OMCI channel. The time instant when the time for keeping the asleep state expires is the time instant when transiting from the asleep state to the active free state. For example, if the time for keeping the asleep state is 10s, the 10s may be timed or counted down. When the 10th second or the 0th second arrives, the ONU is controlled to transit from the asleep state to the active free state.

It should be noted that, when the OLT sends a value of the Thold to the ONU via the OMCI channel, in addition to the time for keeping the asleep state, a first time period and a second time period are also required to be sent to the ONU. The first time period is the time for the ONU to keep in the doze/watch aware state, and the second time period is the time for the ONU to keep in the sleep aware state. The effects of the first time period and the second time period are illustrated in the subsequent solutions.

After controlling the ONU to transit from the asleep state to the active free state, the LPI/LDI message is detected. If a local LPI/LDI message from the ONU is detected, the ONU transits from the active free state to the doze/watch aware state. The ONU is controlled to transit from the doze/watch aware state to the listen/watch state when the timing or the countdown of the first time period that is the time for keeping the doze/watch aware state expires. Considering that the uplink and downlink data need to be transmitted in the state in which the uplink data transmit clock and downlink data transmit clock are turned on, after the ONU transits from the asleep state to the active free state and from the active free state to the doze/watch aware state, the uplink data transmit clock and the downlink data transmit clock are both in the on state. After the ONU enters the listen/watch state from the doze/watch aware state, the uplink data transmit clock in the on state is switched to the off state, and the downlink data transmit clock is controlled to be in the on state or switched to an interval on state. The uplink data cannot be transmitted in the listen/watch state. When the downlink data exists, the downlink data may be transmitted in case that the downlink data transmission clock is in an on state or an interval on state. It should be known to those skilled in the art that, the downlink data transmit clock being in the interval on state refers to being in the on state in a certain time period and being in the off state in a certain time period rather than being always in the on state. The transmission of the downlink data needs to be performed when the downlink data transmit clock is in the on state. For example, the downlink data transmit clock is set to be turned on every 5s. Thereby it achieves the purpose of transiting from the asleep state to the listen/watch state in case that only the downlink data is transmitted. The transition mode is simple and effective, thereby greatly saving the energy consumption.

The ONU in the asleep state knows the existence of the downlink data in the following manner. When the ONU is in the asleep state, a processor of the GPON/XGPON system detects the downlink data of the ONU. If the downlink data is detected, the ONU is woken up and notified that the downlink data exists currently. Specifically, the ONU in the asleep state may be woken up via a local wake-up indication (LWI) message of the ONU, or the ONU in the asleep state may be woken up by the OLT sending a PLOAM off and a forced wake-up indication (FWI) message to the ONU.

Compared with the related art, in which the long transition time and a large energy consumption resulting from transiting the ONU in the asleep state from the asleep state to the listen/watch state, namely transiting from the asleep state to the active held state and from the active held state to the active free state, in the present embodiment, when the ONU in the sleep state detects that only downlink data exists, the ONU directly transits from the asleep state to the active free state, and enters the listen/watch state from the active free state via the doze/watch aware state. It does not involve transiting from the asleep state to the active held state and from the active held state to the active free state, thereby shortening the transition time and reducing the energy consumption, and thus achieving effective energy saving for the GPON/XGPON system.

In 302, when the ONU is in the listen/watch state, upon detection of absence of uplink and downlink data, the ONU is controlled to transit from the listen/watch state to the active free state, and transit from the active free state to the asleep state.

The operation 302 is explained in conjunction with FIG.2. The uplink data transmit clock of the ONU in the listen/watch state is in an off state, so the uplink data cannot be transmitted. The downlink data transmit clock of the ONU in the listen/watch state is in an on state or in an interval on state to transmit the downlink data. When the ONU in the listen/watch state knows that no downlink data exists or the downlink data transmission is stopped, it is required to enter the asleep state from the listen/watch state considering the energy saving effect. First, the ONU is controlled to transit from the listen/watch state to the active free state. Specifically, the OLT sets the time when the ONU is in the listen/watch state in advance, and sends the time period for keeping the listen/watch state to the ONU while the OLT sends a value of the Thold to the ONU via the OMCI channel. The time instant when the time for keeping the listen/watch state expires is the time instant when transiting from the listen/watch state to the active free state. For example, if the time for keeping the listen/watch state is 12s, the 12s may be timed or counted down. When the 12th second or the 0th second arrives, the ONU is controlled to transit from the listen/watch state to the active free state.

After controlling the ONU to transit from the listen/watch state to the active free state, the LSI message is detected. If a LSI message from the ONU is detected, the ONU transits from the active free state to the sleep aware state, and the ONU is controlled to transit from the sleep Aware state to the asleep state when a timing or a countdown of the second time period that is the time for keeping in the sleep aware state expires. Specifically, after controlling the ONU to transit from the listen/watch state to the active free state and transit from the active free state to the sleep aware state, the uplink data transmit clock and the downlink data transmit clock are all in an on state. After controlling the ONU to transit from the sleep aware state to the asleep state, the uplink data transmit clock and the downlink data transmit clock in the on state are all switched to the off state. Thereby it achieves the purpose of transiting from the listen/watch state to the asleep state when no uplink and downlink data is transmitted. The transition mode is simple and effective, and the energy consumption can be greatly saved.

The manner in which the ONU in the listen/watch state knows that no downlink data exists is similar to the above-described manner in which the ONU in the asleep state knows that the downlink data exists, and details are not described herein.

Compared with the related art, in which the long transition time and a large energy consumption resulting from transiting the ONU in the listen/watch from the listen/watch state to the asleep state, namely transiting from the listen/watch state to the active held state and from the active held state to the active free state, in the present embodiment, when the ONU in the listen/watch state detects that no downlink data exists, it directly transits from the listen/watch state to the active free state, and enters the asleep state from the active free state via the sleep Aware state. It does not involve transiting from the listen/watch state to the active held state and transiting from the active held state to the active free state, thereby shortening the transiting time and reducing the energy consumption, and thus achieving effective energy saving for the GPON/XGPON system.

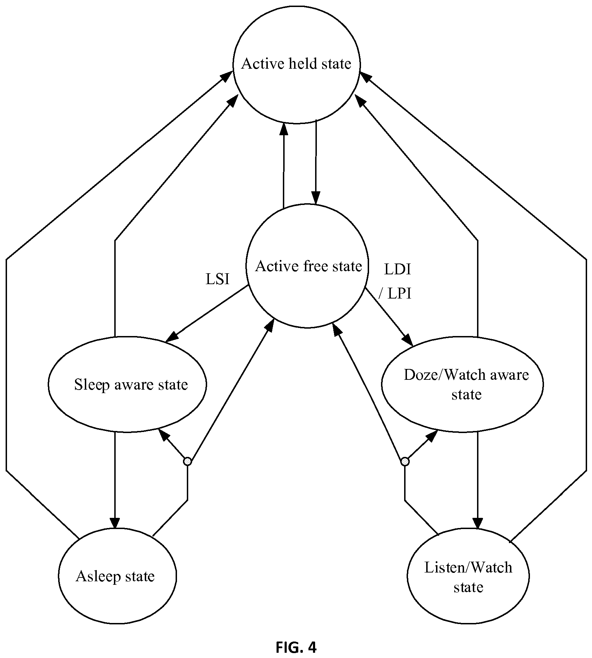

FIG. 4 is another schematic diagram illustrating a transition of a state machine of an ONU according to an embodiment of the present invention. The schematic diagram illustrating a transition of the state machine as illustrated in FIG. 4 is a combination of the two diagrams illustrating the transition of the state machine as illustrated in FIG. 1 and FIG. 2. When the ONU supports both the state transition mode illustrated in FIG. 1 and the state transition mode illustrated in FIG. 2, it is also required to inform the ONU of the state transition mode to be performed when waking up the ONU in the asleep state. For example, if the ONU is informed to transit according to the state transition mode two, the ONU enters the active free state from the asleep state. If the ONU is informed to transit according to the state transition mode one, the ONU enters the sleep aware state from the asleep state. Similarly, it is required to inform an ONU in the listen/watch state of the state transition mode to be performed. If the ONU is informed to transit according to the state transition mode two, the ONU enters the active free state from the listen/watch state. If the ONU is informed to transit according to the state migration mode one, the ONU enters the doze/watch aware state from the listen/watch state.

It should be noted that the left half of FIG. 2 and FIG. 4 illustrates the asleep state, and the right half of FIG. 2 and FIG. 4 illustrates the listen/watch state. The embodiment of the present invention provides a process of transiting from the asleep state to the listen/watch state directly, and/or a process of transiting from the listen/watch state to the asleep state directly, and it does not involve transiting back to the active held state again.

It should be understood by those skilled in the art that, in consideration of the convenience of the description of the present solution, two different forms of the doze watch aware state that are the doze aware state and the watch aware state are written as the doze/watch aware state in the present embodiment. Two different forms of the listen/watch state that are the listen state and the watch state are written as the listen/watch state. Specifically, upon reception of the LDI indication, the ONU in the active free state will enter the Doze Aware state from the active free state and then transits to the Listen state. Upon reception of the LPI indication, the ONU in the active free state will enter the watch aware state from the active free state and then transits to the watch state. Moreover, it should be understood that, the uplink and downlink data need to be transmitted when the uplink data transmit clock and downlink data transmit clock are in the on state. When the uplink/downlink data transmit clock is turned off, if the uplink/downlink data is detected, it is required to turn on the turned-off uplink/downlink data transmit clock accordingly.

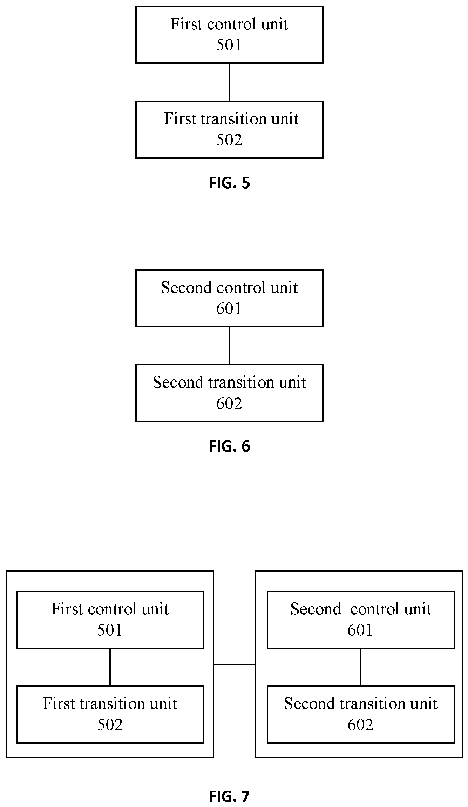

A first ONU is provided according to the embodiments of the present invention, as illustrated in FIG. 5, which includes a first control unit 501 and a first transition unit 502.

Specifically, the first control unit 501 is configured to when the ONU is in an asleep state, upon detection of presence of only downlink data, control the ONU to transit from an asleep state to an active free state.

The first transition unit 502 is configured to transit from the active free state to a listen/watch state.

The first control unit 501 is further configured to:
detect a local low power indication (LPI) message or a local doze indication (LDI) message; and
acquire and time a first time period,
where the first transition unit 502 is configured to transit the ONU from the active free state to a doze/watch aware state when the LPI message or the LDI message is detected by the first control unit 501; and
transit the ONU from the doze/watch aware state to the listen/watch state when the first control unit 501 determines that the timing or a countdown of the first time period expires.

The first control unit 501 is further configured to:
when the ONU is in the asleep state, control an uplink data transmit clock and a downlink data transmit clock to be in an off state;
after controlling the ONU to transit from the asleep state to the active free state and transition from the active free state to the doze/watch aware state, control the uplink data transmit clock and the downlink data transmit clock to be in an on state; and
after controlling the ONU to transit from the doze/watch aware state to the listen/watch state, switch the uplink data transmit clock in the on state to the off state, and control the downlink data transmit clock to be in the on state or switch the downlink data transmit clock from the on state to an interval on state.

It should be noted that, the first ONU according to the embodiment of the present invention has a principle of solving the problem being similar to the foregoing method for transiting a state of the ONU, specifically, the operation 301. Therefore, the implementation process and implementation principle of the first ONU may be referred to the description of the implementation process and the implementation principle of the foregoing method, and the repeated part is not described.

Compared with the related art, in which the long transition time and a large energy consumption resulting transiting the ONU in the asleep state from the asleep state to the listen/watch state, namely transiting from the asleep state to the active held state and from the active held state to the active free state, in the present embodiment, when the ONU in the sleep state detects that only downlink data exists, it directly transits from the asleep state to the active free state, and enters the listen/watch state from the active free state via the doze/watch aware state. It does not involve transiting from the asleep state to the active held state and from the active held state to the active free state, thereby shortening the transition time and reducing the energy consumption, and thus achieving effective energy saving for the GPON/XGPON system.

A second ONU is provided according to the embodiments of the present invention, as illustrated in FIG. 6, which includes a second control unit 601 and a second transition unit 602.

Specifically, the second control unit 601 is configured to when the ONU is in the listen/watch state, upon detection of absence of the downlink data, control the ONU to transit from the listen/watch state to an active free state.

The second transition unit 602 is configured to transit from the active free state to the asleep state.

The second control unit 601 is further configured to:
detect a local sleep indication (LSI) message; and
acquire and time a second time period,
where the second transition unit 602 is configured to control the ONU to transit from the active free state to a sleep aware state when the LSI message is detected by the second control unit 602; and
control the ONU to transit from the sleep aware state to the asleep state when the second control unit 602 determines that the timing or a countdown of the second time period expires.

The second control unit 602 is further configured to:
when the ONU is in the listen/watch state, control an uplink data transmit clock of the ONU to be in an off state, and control a downlink data transmit clock of the ONU to be in an on state or an interval on state;
after controlling the ONU to transit from the listen/watch state to the active free state and transit from the active free state to the sleep aware state, control the uplink data transmit clock and the downlink data transmit clock to be in an on state; and
after controlling the ONU to transit from the sleep aware state to the asleep state, switch the uplink data transmit data and the downlink data transmit data in the on state to an off state.

It should be noted that, the second ONU according to the embodiment of the present invention has a principle of solving the problem being similar to the foregoing method for transiting a state of the ONU, specifically, the operation 302. Therefore, the implementation process and implementation principle of the second ONU may be referred to the description of the implementation process and the implementation principle of the foregoing method, and the repeated part is not described.

Compared with the related art, in which the long transition time and a large energy consumption resulting from transiting the ONU in the listen/watch from the listen/watch state to the asleep state, namely transiting from the listen/watch state to the active held state and from the active held state to the active free state, in the present embodiment, when the ONU in the listen/watch state detects that no downlink data exists, the ONU directly transits from the listen/watch state to the active free state, and enters the asleep state from the active free state via the sleep Aware state. It does not involve transiting from the listen/watch state to the active held state and transiting from the active held state to the active free state, thereby shortening the transiting time and reducing the energy consumption, and thus achieving effective energy saving for the GPON/XGPON system.

As illustrated in FIG. 7, a third ONU is provided according to the embodiment of the present invention, which at least includes the first control unit 501 and the first transition unit 502 as illustrated in FIG. 5, and the second control unit 601 and the second transition unit 602 as illustrated in FIG. 6. The function implemented by each component unit is referred to the foregoing description, and are not described herein.

In a practical application, the first control unit 501, the first transition unit 502, the second control unit 601, and the second transition unit 602 may be implemented as a central processing unit (CPU), a digital signal processor (DSP), a micro processor unit (MPU), a field programmable gate array (FPGA), or the like.

According to the embodiments of the present invention, it is provided a computer storage medium having stored thereon computer-executable instructions for achieving the method according to the foregoing embodiments.

It should be understood by those skilled in the art that, the embodiments of the present invention may be provided as a method, a system, or a computer program product. Therefore, the present invention may take the form of a hardware embodiment, a software embodiment, or a combination of software and hardware aspects. Moreover, the present invention may take the form of a computer program product embodied on one or more computer usable storage media (including but not limited to disk storage and optical storage, etc.) in which computer usable program code is embodied.

The present invention is described with reference to flowcharts and/or block diagrams of methods, apparatus (systems), and computer program products according to embodiments of the present invention. It should be understood that each flow and/or block of the flowchart and/or block diagram, and a combination of a flow and/or a block in a flowchart and/or block diagram may be implemented by computer program instructions. These computer program instructions may be provided to a processor of a general purpose computer, a special purpose computer, an embedded processor, or other programmable data processing device to produce a machine for the execution of instructions, so as to produce an apparatus for implementing the functions specified in one or more flows of the flowchart or in one or more blocks of the flowchart by the instructions executed by a processor of a computer or other programmable data processing device.

The computer program instructions may also be stored in a computer readable memory that can direct a computer or other programmable data processing device to operate in a specific manner, such that the instructions stored in the computer readable memory produce an article of manufacture including the instruction device. The instruction apparatus implements the functions specified in one or more flows of the flowchart and/or one or more blocks of a block diagram.

These computer program instructions may also be loaded onto a computer or other programmable data processing device such that a series of operational steps are performed on a computer or other programmable device to produce computer-implemented processing for execution on a computer or other programmable device. Accordingly, the instructions executed on a computer or other programmable device provide operations for implementing the functions specified in one or more flows of a flowchart and/or one or more blocks of a block diagram.

The above is only the preferred embodiment of the present invention and is not intended to limit the scope of protection of the present invention.

### INDUSTRIAL APPLICABILITY

In the embodiments of the present invention, when the ONU is in the asleep state, upon detection of presence of only downlink data, the ONU is controlled to transit from the asleep state to the active free state, and then transit from the active free state to the listen/watch state. When the ONU is in the listen/watch state, upon detection of absence of the downlink data, the ONU is controlled to transit from the listen/watch state to the active free state, and then transit from the active free state to the asleep state. Thereby the energy consumption is reduced, the transition time shortened, and thus effective energy saving for the GPON/XGPON system is achieved.

## Claims

1. A method for transiting a state of an optical network unit, ONU, the method comprises:
(301) when the ONU is in an asleep state, upon detection of presence of only downlink data, controlling the ONU to transit from the asleep state to an active free state, and transit from the active free state to a listen/watch state; and
(302) when the ONU is in the listen/watch state, upon detection of absence of downlink data, controlling the ONU to transit from the listen/watch state to the active free state, and transit from the active free state to the asleep state;
**characterized by** further comprising: after controlling the ONU to transit from the asleep state to the active free state,
detecting a local low power indication, LPI, message or a local doze indication, LDI, message; and
acquiring and timing a first time period,
wherein transiting from the active free state to the listen/watch state comprises:
upon detection of the LPI message or the LDI message, controlling the ONU to transit from the active free state to a doze/watch aware state; and
controlling the ONU to transit from the doze/watch aware state to the listen/watch state when the timing or a countdown of the first time period expires; and,
comprising: after controlling the ONU to transit from the listen/watch state to the active free state,
detecting a local sleep indication, LSI, message; and
acquiring and timing a second time period,
wherein transiting from the active free state to the asleep state comprises:
upon detection of the LSI message, controlling the ONU to transit from the active free state to a sleep aware state; and
controlling the ONU to transit from the sleep aware state to the asleep state when the timing or a countdown of the second time period expires.

2. The method according to claim 1, further comprising:
when the ONU is in the asleep state, controlling an uplink data transmit clock and a downlink data transmit clock to be in an off state;
after controlling the ONU to transit from the asleep state to the active free state and transit from the active free state to the doze/watch aware state, controlling the uplink data transmit clock and the downlink data transmit clock to be in an on state; and
after controlling the ONU to transit from the doze/watch aware state to the listen/watch state, switching the uplink data transmit clock from the on state to the off state, and controlling the downlink data transmit clock to be in the on state or switching the downlink data transmit clock from the on state to an interval on state.

3. The method according to claim 1, further comprising: when the ONU is in the listen/watch state, controlling an uplink data transmit clock of the ONU to be in an off state, and controlling a downlink data transmit clock of the ONU to be in an on state or an interval on state;
after controlling the ONU to transit from the listen/watch state to the active free state and transit from the active free state to the sleep aware state, controlling the uplink data transmit clock and the downlink data transmit clock to be in an on state; and
after controlling the ONU to transit from the sleep aware state to the asleep state, switching the uplink data transmit clock and the downlink data transmit clock from the on state to the off state.

4. An optical network unit, ONU, **characterized in that** the ONU comprises:
a first control unit (501), a first transition unit (502), a second control unit (601) and a second transition unit (602),
wherein the first control unit (501) is configured to when the ONU is in an asleep state, upon detection of presence of only downlink data, control the ONU to transit from an asleep state to an active free state;
the first transition unit (502) is configured to transit from the active free state to a listen/watch state;
the second control unit (601) is configured to when the ONU is in the listen/watch state, upon detection of absence of downlink data, control the ONU to transit from the listen/watch state to the active free state; and
the second transition unit (602) is configured to transit from the active free state to the asleep state;
**characterized in that**,
the first control unit (501) is further configured to:
detect a local low power indication, LPI, message or a local doze indication, LDI, message; and
acquire and time a first time period,
wherein the first transition unit (502) is configured to transit the ONU from the active free state to a doze/watch aware state when the LPI message or the LDI message is detected by the first control unit; and
transit the ONU from the doze/watch aware state to the listen/watch state when the first control unit determines that the timing or a countdown of the first time period expires; and,
the second control unit (601) is further configured to:
detect a local sleep indication, LSI, message; and
acquire and time a second time period,
wherein the second transition unit (602) is configured to control the ONU to transit from the active free state to a sleep aware state when the LSI message is detected by the second control unit; and
control the ONU to transit from the sleep aware state to the asleep state when the second control unit determines that the timing or a countdown of the second time period expires.

5. The ONU according to claim 4, wherein the first control unit (501) is further configured to:
when the ONU is in the asleep state, control an uplink data transmit clock and a downlink data transmit clock to be in an off state;
after controlling the ONU to transit from the asleep state to the active free state and transit from the active free state to the doze/watch aware state, control the uplink data transmit clock and the downlink data transmit clock to be in an on state; and
after controlling the ONU to transit from the doze/watch aware state to the listen/watch state, switch the uplink data transmit clock from the on state to the off state, and control the downlink data transmit clock to be in the on state or switch the downlink data transmit clock from the on state to an interval on state.

6. The ONU according to claim 4, wherein the second control unit (601) is further configured to:
when the ONU is in the listen/watch state, control an uplink data transmit clock of the ONU to be in an off state, and control a downlink data transmit clock of the ONU to be in an on state or an interval on state;
after controlling the ONU to transit from the listen/watch state to the active free state and transit from the active free state to the sleep aware state, control the uplink data transmit clock and the downlink data transmit clock to be in an on state; and
after controlling the ONU to transit from the sleep aware state to the asleep state, switch the uplink data transmit clock and the downlink data transmit clock from the on state to the off state.

7. A computer storage medium having stored thereon computer-executable instructions to cause the optical network unit, ONU, of claim 4 to execute the steps of the method according to any one of claims 1 to 3.

## Patentansprüche

1. Verfahren zum Übertragen eines Zustands einer optischen Netzwerkeinheit, ONU, wobei das Verfahren umfasst,
(301) dass, wenn sich die ONU in einem Schlafzustand befindet, nachdem erkannt worden ist, dass nur Abwärtsverbindungsdaten vorhanden sind, die ONU gesteuert wird, um von dem Ruhezustand in einen aktiven freien Zustand überzugehen und um von dem aktiven freien Zustand in einen Abhör- / Beobachtungszustand überzugehen, und
(302) dass, wenn sich die ONU in dem Abhör- / Beobachtungszustand befindet, nachdem erkannt worden ist, dass die Abwärtsverbindungsdaten nicht vorhanden sind, die ONU gesteuert wird, um von dem Abhör- / Beobachtungszustand in den aktiven freien Zustand überzugehen und um von dem aktiven freien Zustand in den Ruhezustand überzugehen, **dadurch gekennzeichnet, dass** es ferner umfasst
nachdem die ONU gesteuert worden ist, um von dem Ruhezustand in den aktiven freien Zustand überzugehen,
ein Erfassen einer Nachricht zur Anzeige einer lokalen niedrigen Energie, LPI, oder einer Nachricht zur Anzeige eines lokalen Schlummerns, LDI, und
ein Erlangen und ein zeitliches Abstimmens eines ersten Zeitraums,
wobei der Übergang von dem aktiven freien Zustand in den Abhör- / Beobachtungszustand umfasst,
dass, wenn die LPI-Nachricht erfasst worden ist, die ONU gesteuert wird, um von dem aktiven freien Zustand in einen Zustand, der Schlummern / Beobachten kann, überzugehen, und
dass, wenn die Zeitvorgabe oder ein Countdown des ersten Zeitraums abläuft, die ONU gesteuert wird, um von dem Status "Schlummern / Beobachten" in den Status "Hören / Beobachten" überzugehen, und dass es ferner umfasst:
nachdem die ONU gesteuert worden ist, um von dem Abhör- / Beobachtungszustand in den aktiven freien Zustand überzugehen,
ein Erkennen einer Nachricht zur Anzeige eines lokalen Schlafens, LSI, und
ein Erfassen und ein zeitliches Abstimmens eines zweiten Zeitraums,
wobei der Übergang von dem aktiven freien Zustand in den Ruhezustand umfasst,
dass, nachdem die LSI-Nachricht erfasst worden ist, die ONU gesteuert wird, um von dem aktiven freien Zustand in einen Zustand, der Schlafen kann, überzugehen, und
dass, wenn die Zeitvorgabe oder ein Countdown des zweiten Zeitraums abläuft, die ONU gesteuert wird, um von dem Zustand, der Schlafen kann, in den Ruhezustand überzugehen.

2. Verfahren nach Anspruch 1, welches ferner umfasst:
dass, wenn sich die ONU in dem Ruhezustand befindet, ein Aufwärtsverbindungsdatenübertragungstakt und ein Abwärtsverbindungsdatenübertragungstakt gesteuert werden, um in einem ausgeschalten Zustand zu sein,
dass, nachdem die ONU gesteuert worden ist, um von dem Ruhezustand in den aktiven freien Zustand überzugehen und um von dem aktiven freien Zustand in den Zustand, der Schlummern / Beobachten kann, überzugehen, der Aufwärtsverbindungsdatenübertragungstakt und der Abwärtsverbindungsdatenübertragungstakt gesteuert werden, um in einem eingeschalteten Zustand zu sein, und
dass, nachdem die ONU gesteuert worden ist, um von dem Zustand, der Schlummern / Beobachten kann, in den Abhör- / Beobachtungszustand überzugehen, der Aufwärtsverbindungsdatenübertragungstakt von dem eingeschalteten Zustand in den ausgeschalten Zustand umgeschaltet wird und der Abwärtsverbindungsdatenübertragungstakt gesteuert wird, um in einen eingeschalteten Zustand umgeschaltet zu werden, oder der Abwärtsverbindungsdatenübertragungstakt von dem eingeschalteten Zustand in einen Zustand mit Intervall umgeschaltet wird.

3. Verfahren nach Anspruch 1, welches ferner umfasst,
dass, wenn sich die ONU in dem Abhör- / Beobachtungszustand befindet, ein Aufwärtsverbindungsdatenübertragungstakt der ONU gesteuert wird, um in einem ausgeschalten Zustand zu sein, und dass ein Abwärtsverbindungsdatenübertragungstakt der ONU gesteuert wird, um in einem eingeschalteten Zustand oder in einem Zustand mit Intervall zu sein,
dass, nachdem die ONU gesteuert worden ist, um von dem Abhör- / Beobachtungszustand in den aktiven freien Zustand überzugehen und um von dem aktiven freien Zustand in den Zustand, der Schlafen kann, überzugehen, der Aufwärtsverbindungsdatenübertragungstakt und der Abwärtsverbindungsdatenübertragungstakt gesteuert werden, um in einem eingeschalteten Zustand zu sein, und
dass, nachdem die ONU gesteuert worden ist, um von dem Zustand, der Schlafen kann, in den Ruhezustand überzugehen, der Aufwärtsverbindungsdatenübertragungstakt und der Abwärtsverbindungsdatenübertragungstakt von dem eingeschalteten Zustand in den ausgeschalten Zustand umgeschaltet werden.

4. Optische Netzwerkeinheit, ONU, die **dadurch gekennzeichnet ist, dass** die ONU aufweist:
eine erste Steuereinheit (501), eine erste Übergangseinheit (502), eine zweite Steuereinheit (601) und eine zweite Übergangseinheit (602),
wobei die erste Steuereinheit (501) so ausgestaltet ist, dass, wenn sich die ONU in einem Ruhezustand befindet, und dass nachdem erkannt worden ist, dass nur Abwärtsverbindungsdaten vorhanden sind, die ONU gesteuert wird, dass sie von einem Ruhezustand in einen aktiven freien Zustand übergeht,
wobei die erste Übergangseinheit (502) ausgestaltet ist, um von dem aktiven freien Zustand in einen Abhör- / Beobachtungszustand überzugehen,
wobei die zweite Steuereinheit (601) so ausgestaltet ist, dass wenn sich die ONU in dem Abhör- / Überwachungszustand befindet, und dass nachdem erkannt worden ist, dass die Abwärtsverbindungsdaten nicht vorhanden sind, die ONU gesteuert wird, dass sie von dem Abhör- / Überwachungszustand in den aktiven freien Zustand übergeht, und
wobei die zweite Übergangseinheit (602) ausgestaltet ist, um von dem aktiven freien Zustand in den Schlafzustand überzugehen, **dadurch gekennzeichnet,**
**dass** die erste Steuereinheit (501) ferner ausgestaltet ist für:
ein Erfassen einer Nachricht zur Anzeige einer lokalen niedrigen Energie, LPI, oder einer Nachricht zur Anzeige eines lokalen Schlummerns, LDI, und
ein Erlangen und ein zeitliches Abstimmens eines ersten Zeitraums,
wobei die erste Übergangseinheit (502) ausgestaltet ist, um die ONU von dem aktiven freien Zustand in einen Zustand, der Schlummern / Beobachten kann, zu überführen, wenn die LPI-Nachricht oder die LDI-Nachricht von der ersten Steuereinheit erfasst worden ist, und
ein Übergehen der ONU von dem Status, der Schlummern / Beobachten kann, in den Abhör- / Beobachtungszustand, wenn die erste Steuereinheit feststellt, dass die Zeitvorgabe oder ein Countdown des ersten Zeitraums abläuft,
und **dass** die zweite Steuereinheit (601) ist ferner ausgestaltet für:
ein Erfassen einer lokalen Schlafanzeige, einer LSI-Nachricht, und
ein Erlangen und ein zeitliches Abstimmens eines zweiten Zeitraums,
wobei die zweite Übergangseinheit (602) ausgestaltet ist, um die ONU so zu steuern, dass sie von dem aktiven freien Zustand in einen Zustand, der Schlafen kann, übergeht, wenn die LSI-Nachricht von der zweiten Steuereinheit erfasst worden ist, und
ein Steuern der ONU, um von dem Zustand, der Schlafen kann, in den Ruhezustand überzugehen, wenn die zweite Steuereinheit feststellt, dass die Zeitvorgabe oder ein Countdown des zweiten Zeitraums abläuft.

5. ONU nach Anspruch 4, wobei die erste Steuereinheit (501) ferner ausgestaltet ist,
dass, wenn sich die ONU in dem Ruhezustand befindet, ein Aufwärtsverbindungsdatenübertragungstakt und ein Abwärtsverbindungsdatenübertragungstakt gesteuert werden, um in einem ausgeschalten Zustand zu sein,
dass, nachdem die ONU gesteuert worden ist, um von dem Ruhezustand in den aktiven freien Zustand überzugehen und um von dem aktiven freien Zustand in den Zustand, der Schlummern / Beobachten kann, überzugehen, der Aufwärtsverbindungsdatenübertragungstakt und den der Abwärtsverbindungsdatenübertragungstakt gesteuert werden, um in einem eingeschalteten Zustand zu sein, und
dass, nachdem die ONU gesteuert worden ist, um von dem Zustand, der Schlummern / Beobachten kann, in den Abhör- / Beobachtungszustand überzugehen, der Aufwärtsverbindungsdatenübertragungstakt von dem eingeschalteten Zustand in den ausgeschalten Zustand geschaltet wird, und der Abwärtsverbindungsdatenübertragungstakt gesteuert wird, um in dem eingeschalteten Zustand zu sein, oder der Abwärtsverbindungsdatenübertragungstakt von dem eingeschalteten Zustand in ein Zustand mit Intervall umschaltet.

6. ONU nach Anspruch 4, wobei die zweite Steuereinheit (601) ferner ausgestaltet ist,
dass, wenn sich die ONU in dem Abhör- / Beobachtungszustand befindet, der Aufwärtsverbindungsdatenübertragungstakt der ONU gesteuert wird, um in einem ausgeschalten Zustand zu sein, und der Abwärtsverbindungsdatenübertragungstakt der ONU gesteuert wird, um in einem eingeschalteten Zustand oder in einem Zustand mit Intervall zu sein,
dass, nachdem die ONU gesteuert worden ist, um von dem Abhör- / Beobachtungszustand in den aktiven freien Zustand überzugehen und um von dem aktiven freien Zustand in den Zustand, der Schlafen kann, überzugehen, der Aufwärtsverbindungsdatenübertragungstakt und der Abwärtsverbindungsdatenübertragungstakt gesteuert werden, um in dem eingeschalteten Zustand zu sein, und
dass, nachdem die ONU gesteuert worden ist, um von dem Zustand, der Schlafen kann, in den Ruhezustand überzugehen, der Aufwärtsverbindungsdatenübertragungstakt und der Abwärtsverbindungsdatenübertragungstakt von dem eingeschalteten Zustand in den ausgeschalten Zustand umgeschaltet werden.

7. Computerspeichermedium, auf dem computerausführbare Anweisungen gespeichert sind, um die optische Netzwerkeinheit, ONU, nach Anspruch 4 zu veranlassen, die Schritte des Verfahrens nach einem der Ansprüche 1 bis 3 auszuführen.

## Revendications

1. Procédé pour la transition d'un état d'une unité de réseau optique, ONU, le procédé comprend :
(301) lorsque l'ONU est dans un état de sommeil profond, lors de la détection de la présence de données en liaison descendante uniquement, la commande de l'ONU afin d'effectuer une transition de l'état de sommeil profond à un état libre actif, et d'effectuer une transition de l'état libre actif à un état d'écoute/surveillance ; et
(302) lorsque l'ONU est dans l'état d'écoute/surveillance, lors de la détection de l'absence de données en liaison descendante, la commande de l'ONU afin d'effectuer une transition de l'état d'écoute/surveillance à l'état libre actif, et d'effectuer une transition de l'état libre actif à l'état de sommeil profond ;
**caractérisé en ce qu'**il comprend en outre : après la commande de l'ONU afin d'effectuer une transition de l'état de sommeil profond à l'état libre actif,
la détection d'un message d'indication local de faible puissance, LPI, ou d'un message d'indication local de veille, LDI ; et
l'acquisition et le chronométrage d'une première période,
dans lequel la transition de l'état libre actif à l'état d'écoute/surveillance comprend :
lors de la détection du message de LPI ou du message de LDI, la commande de l'ONU afin d'effectuer une transition de l'état libre actif à un état de veille ; et
la commande de l'ONU afin d'effectuer une transition de l'état de veille à l'état d'écoute/surveillance lorsque le chronométrage ou un décompte de la première période expire ;
et qu'il comprend : après la commande de l'ONU afin d'effectuer une transition de l'état d'écoute/surveillance à l'état libre actif,
la détection d'un message d'indication local de sommeil, LSI ; et
l'acquisition et le chronométrage d'une deuxième période,
dans lequel la transition de l'état libre actif à l'état de sommeil profond comprend :
lors de la détection du message de LSI, la commande de l'ONU afin d'effectuer une transition de l'état libre actif à un état de sommeil conscient ; et
la commande de l'ONU afin d'effectuer une transition de l'état de sommeil conscient à l'état de sommeil profond lorsque le chronométrage ou un décompte de la deuxième période expire.

2. Procédé selon la revendication 1, comprenant en outre :
lorsque l'ONU est dans l'état de sommeil profond, la commande d'une horloge d'émission de données en liaison montante et d'une horloge d'émission de données en liaison descendante afin d'être dans un état désactivé ;
après la commande de l'ONU afin d'effectuer une transition de l'état de sommeil profond à l'état libre actif et d'effectuer une transition de l'état libre actif à l'état de veille, la commande de l'horloge d'émission de données en liaison montante et de l'horloge d'émission de données en liaison descendante afin d'être dans un état activé ; et
après la commande de l'ONU afin d'effectuer une transition de l'état de veille à l'état d'écoute/surveillance, la commutation de l'horloge d'émission de données en liaison montante de l'état activé à l'état désactivé, et la commande de l'horloge d'émission de données en liaison descendante afin d'être dans l'état activé ou commutation de l'horloge d'émission de données en liaison descendante de l'état activé à un état activé d'intervalle.

3. Procédé selon la revendication 1, comprenant en outre : lorsque l'ONU est dans l'état d'écoute/surveillance, la commande d'une horloge d'émission de données en liaison montante de l'ONU afin d'être dans un état désactivé, et la commande d'une horloge d'émission de données en liaison descendante de l'ONU afin d'être dans un état activé ou un état activé d'intervalle ;
après la commande de l'ONU afin d'effectuer une transition de l'état d'écoute/surveillance à l'état libre actif et d'effectuer une transition de l'état libre actif à l'état de sommeil conscient, la commande de l'horloge d'émission de données en liaison montante et de l'horloge d'émission de données en liaison descendante afin d'être dans un état activé ; et
après la commande de l'ONU afin d'effectuer une transition de l'état de sommeil conscient à l'état de sommeil profond, la commutation de l'horloge d'émission de données en liaison montante et de l'horloge d'émission de données en liaison descendante de l'état activé à l'état désactivé.

4. Unité de réseau optique, ONU, **caractérisé en ce que** l'ONU comprend :
une première unité de commande (501), une première unité de transition (502), une deuxième unité de commande (601) et une deuxième unité de transition (602),
dans lequel la première unité de commande (501) est configurée pour, lorsque l'ONU est dans un état de sommeil profond, lors de la détection de la présence de données en liaison descendante uniquement, commander l'ONU afin d'effectuer une transition d'un état de sommeil profond à un état libre actif ;
la première unité de transition (502) est configurée pour effectuer une transition de l'état libre actif à un état d'écoute/surveillance ;
la deuxième unité de commande (601) est configurée pour, lorsque l'ONU est dans l'état d'écoute/surveillance, lors de la détection de l'absence de données en liaison descendante, commander l'ONU pour effectuer une transition de l'état d'écoute/surveillance à l'état libre actif ; et
la deuxième unité de transition (602) est configurée pour effectuer une transition de l'état libre actif à l'état de sommeil profond ;
**caractérisé en ce que**,
la première unité de commande (501) est en outre configurée pour :
détecter un message d'indication local de faible puissance, LPI, ou un message d'indication local de veille, LDI ; et
acquérir et chronométrer une première période,
dans lequel la première unité de transition (502) est configurée pour effectuer une transition de l'ONU de l'état libre actif à un état de veille lorsque le message de LPI ou le message de LDI est détecté par la première unité de commande ; et
effectuer une transition de l'ONU de l'état de veille à l'état d'écoute/surveillance lorsque la première unité de commande détermine que le chronométrage ou un décompte de la première période expire ;
et,
la deuxième unité de commande (601) est configurée en outre pour :
détecter un message d'indication local de sommeil, LSI ; et
acquérir et chronométrer une deuxième période,
dans lequel la deuxième unité de transition (602) est configurée pour commander l'ONU afin d'effectuer une transition de l'état libre actif à un état de sommeil conscient lorsque le message de LSI est détecté par la deuxième unité de commande ; et
commander l'ONU afin d'effectuer une transition de l'état de sommeil conscient à l'état de sommeil profond lorsque la deuxième unité de commande détermine que le chronométrage ou un décompte de la deuxième période expire.

5. ONU selon la revendication 4, dans laquelle la première unité de commande (501) est en outre configurée pour :
lorsque l'ONU est dans l'état de sommeil profond, commander une horloge d'émission de données en liaison montante et une horloge d'émission de données en liaison descendante afin d'être dans un état désactivé ;
après la commande de l'ONU afin d'effectuer une transition de l'état de sommeil profond à l'état libre actif et d'effectuer une transition de l'état libre actif à l'état de veille, commander l'horloge d'émission de données en liaison montante et l'horloge d'émission de données en liaison descendante afin d'être dans un état activé ; et
après la commande de l'ONU afin d'effectuer une transition de l'état de veille à l'état d'écoute/d'observation, commuter l'horloge d'émission de données en liaison montante de l'état activé à l'état désactivé, et commander l'horloge d'émission de données en liaison descendante afin d'être dans l'état activé ou commuter l'horloge d'émission de données en liaison descendante de l'état activé à un état activé d'intervalle.

6. ONU selon la revendication 4, dans laquelle la deuxième unité de commande (601) est en outre configurée pour :
lorsque l'ONU est dans l'état d'écoute/d'observation, commander une horloge d'émission de données en liaison montante de l'ONU afin d'être dans un état désactivé, et commander une horloge d'émission de données en liaison descendante de l'ONU afin d'être dans un état activé ou un état activé d'intervalle ;
après la commande de l'ONU afin d'effectuer une transition de l'état d'écoute/d'observation à l'état libre actif et d'effectuer une transition de l'état libre actif à l'état de sommeil conscient, commander l'horloge d'émission de données en liaison montante et l'horloge d'émission de données en liaison descendante afin d'être dans un état activé ; et
après la commande de l'ONU afin d'effectuer une transition de l'état de sommeil conscient à l'état de sommeil profond, commuter l'horloge d'émission de données en liaison descendante et l'horloge d'émission de données en liaison montante de l'état activé à l'état désactivé.

7. Support de stockage informatique sur lequel sont stockées des instructions exécutables par ordinateur afin d'amener l'unité de réseau optique, ONU, selon la revendication 4, à exécuter les étapes du procédé selon l'une quelconque des revendications 1 à 3.
